# NEUE EUROPÄISCHE PATENTSCHRIFT

(11) **EP 0 945 376 B2**
(45) Veröffentlichungstag und Bekanntmachung des Hinweises auf die Entscheidung über den Einspruch: **01.08.2007**
(45) Hinweis auf die Patenterteilung: 08.01.2003
(21) Anmeldenummer: 99103173.3
(22) Anmeldetag: 18.02.1999
(51) Int. Cl.: B65G 47/51, B65B 35/04

(54) **Verfahren und Anordnung zum Überführen von Gegenständen in Ausnehmungen eines Speichers**
Method and apparatus for transferring objects in cavities of an accumulator.
Procédé et dispositif pour transférer des objets vers des cavités d'un accumulateur

(30) Priorität: 28.02.1998 DE 19808554
(43) Veröffentlichungstag der Anmeldung: 29.09.1999
(73) Patentinhaber: Hauni Maschinenbau AG, 21033 Hamburg (DE)
(72) Erfinder: Heide, Jirko, 21493 Schwarzenbek (DE); Hoepfner, Roland, 23627 Gross Grönau (DE)

(56) Entgegenhaltungen:
- GB-A- 345 516
- GB-A- 1 196 821
- GB-A- 2 025 347
- GB-A- 2 051 722
- US-A- 3 340 992
- US-A- 4 560 057
- US-A- 4 690 265
- US-A- 4 717 010

## Beschreibung

Die Erfindung betrifft ein Verfahren zum Überführen von Gegenständen, insbesondere von Packungen, in Ausnehmungen eines Speichers.
Die Erfindung betrifft außerdem eine Anordnung zum Überführen von Gegenständen, insbesondere von Packungen, in Ausnehmungen eines Speichers.

In der Fördertechnik tritt manchmal das Problem auf, geförderte Gegenstände zwischenspeichern und anschließend wieder weiterfördern zu müssen. Insbesondere bei der Verpackung von Gütern, z. B. von Zigaretten, bei der unfertige Packungen von einer Maschine (z. B. der eigentlichen Verpackungsmaschine) zu einer nachgeordneten Maschine (z. B. einer Folieneinschlagmaschine) gefördert werden, besteht dieses Problem. Ist die belieferte Maschine gestört, müssen die Gegenstände in einen Speicher überführt werden, damit die liefernde Maschine ungestört weiterproduzieren kann. Ist die liefernde Maschine gestört, so müssen Gegenstände aus dem Speicher entnommen werden, damit die belieferte Maschine ungestört weiterproduzieren kann.
In der US-Patentschrift 3.340.992 ist bereits eine solche Einrichtung zum Überführen von Gegenständen (Packungen) in ein Speichermagazin zur bedarfsweisen Zwischenspeicherung sowie zur bedarfsweisen Entnahme von Gegenständen aus diesem Speichermagazin gezeigt. Dabei wird zunächst aus auf einer Förderbahn hintereinander angeförderten Gegenständen eine definierte Reihe gebildet. Das Einbringen dieser Reihe von Gegenständen in das Speichermagazin, welches hier oberhalb des Zuförderers und somit oberhalb der gebildeten Reihe angeordnet ist, erfolgt hier demgemäss von unten. Das erfordert wiederum einen betätigbaren Abstützmechanismus am unteren Ende des schachtartigen Speichermagazins, um einerseits die im Speichermagazin befindlichen Reihen von Gegenständen gegen Herausfallen nach unten abzustützen und um andererseits zur beabsichtigten Entnahme einer Gegenstandsreihe die untere Schachtöffnung freizugeben.
Das nur aus einem Schacht bestehende Speichermagazin hat eine verhältnismäßig geringe Speicherkapazität. Die gewählte Beschickungs- und Entnahmemöglichkeit am unteren Schachtende und die damit notwendigen Maßnahmen zur Sperrung und Abstützung an dieser Stelle machen eine Vergrößerung der Schächteanzahl und damit eine Erweiterung der Speicherkapazität kaum möglich.

In dem Dokument GB-A-2051722 wird das Überführen von Packungen in Richtung der Anförderung zum Formen von Stapeln offenbart.

Die der Erfindung zugrundeliegende Aufgabe besteht darin, die Befüllung und Entleerung von Speichern und deren Speicherkapazität zu verbessern.

Die Aufgabe wird gelöst durch ein Verfahren gemäß Anspruch 1 und eine Anordnung gemäß Anspruch 6.
Weiterbildungen und weitere Ausgestaltungen des Verfahrens gemäß der Erfindung sind den untergeordneten Verfahrensansprüchen zu entnehmen.
Weiterbildungen und weitere Ausgestaltungen der Anordnung gemäß der Erfindung sind den untergeordneten Anordnungsansprüchen zu entnehmen.
Der Vorteil gemäß der Erfindung besteht darin, dass ein sicheres und schnelles Befüllen und Entleeren von Speichern mit großer Speicherkapazität ermöglicht wird.

Die Erfindung wird anhand eines Ausführungsbeispieles näher erläutert.

Es zeigen:
- Figur 1: einen Speicher für Zigarettenpackungen in einer Vorderansicht,
- Figur 2: eine Seitenansicht des Speichers gemäß Figur 1,
- Figur 3: eine Draufsicht auf den Speicher gemäß Figuren 1 und 2,
- Figuren 4a ... 4c: eine vergrößerte Darstellung einer Schachtwand des Speichers.

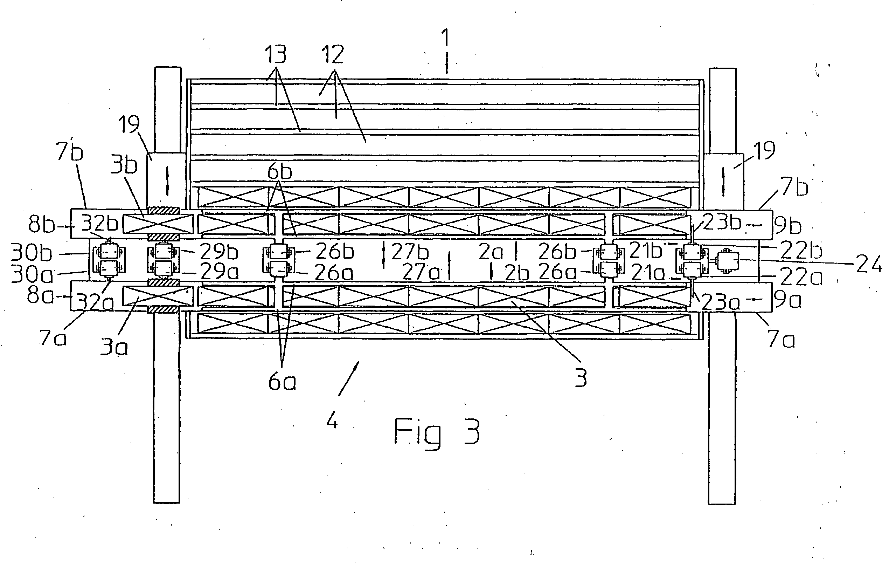

Ein Speicher 1 zum Aufnehmen und Abgeben von jeweils zwei Reihen 2a, 2b von Gegenständen in Form von Zigarettenpackungen 3 weist in einer Ansammelzone 4 Führungen 6a, 6b auf, die jeweils aus zwei Leisten bestehen und unter denen Förderbahnen darstellende Transportbänder 7a, 7b zum Zufördern der Packungen 3 in Richtung der Pfeile 8a, 8b und zum Bilden der Reihen 2a, 2b in der Ansammelzone 4 laufen.
Der Speicher 1 befindet sich bevorzugt in einer Förderbahn zwischen einer nicht dargestellten Verpackungsmaschine zum Herstellen von Zigarettenpackungen (z. B. von dem in der Zigarettenindustrie bekannten Typ COMPAS der Anmelderin) und einer nicht dargestellten Weiterverarbeitungsmaschine (z. B. einer Folieneinschlagmaschine vom Typ C90 der Anmelderin oder einem Stangenpacker oder einem Kartonpacker). Ist das Gleichgewicht zwischen liefernder Maschine und belieferter Maschine gestört, verarbeitet z. B. die belieferte Maschine (z. B. die Folieneinschlagmaschine) weniger Packungen als die Verpackungsmaschine anliefert oder ist sie gestört, dann werden auf den Förderbändern 7a, 7b in Richtung der Pfeile 8a, 8b herangeförderte Packungen in der Ansammelzone 4 zu Packungsreihen 2a, 2b angesammelt und in den Speicher 1 überführt, so daß die Verpakkungsmaschine mit voller oder verminderter Leistung weiterlaufen kann. Ist umgekehrt die liefernde Verpackungsmaschine gestört oder liefert sie weniger Packungen als die belieferte Weiterverarbeitungsmaschine abnimmt, dann werden in der Ansammelzone Packungsreihen 2a, 2b aus dem Speicher 1 entnommen und in Richtung der Pfeile 9a, 9b zu der Weiterverarbeitungsmaschine transportiert.
Der Speicher 1 weist Schächte 12 auf, die von Zwischenwänden 13 gebildet werden. In zwei Schächten 12 befinden sich von Antrieben 14a, 14b absenkbare und anhebbare Stützleisten 16a, 16b. Die Antriebe können an sich bekannte Linearantriebe, z. B. vom Typ HLE-80 der Firma Hauser, Robert-Bosch-Straße 22, 77607 Offenburg, DE, sein und brauchen daher nicht im einzelnen dargestellt zu werden. Sie senken oder heben eine Stützleiste 16a, 16b um jeweils eine Packungshöhe h, wenn eine Reihe 2a, 2b in einen Schacht überführt bzw. aus ihm entfernt worden ist. Sind zwei Schächte mit Packungsreihen gefüllt, so werden die Stützleisten 16a, 16b durch Ausnehmungen 17 in dem Schachtboden 18 hindurchbewegt. Der Speicher 1 wird um eine Schachtbreite horizontal verfahren und die Stützleisten durch weitere Ausnehmungen der jetzt über ihnen stehenden leeren Schächte hindurchbewegt und in diesen Schächten angehoben, bis sie unterhalb der Schachteinlässe 15 zur Übernahme weiterer Packungsreihen bereit sind. Zum Entleeren von Schächten spielt sich der beschriebene Vorgang in umgekehrter Reihenfolge ab, d. h. nach Leerung zweiter Schächte werden die zugehörigen Stützleisten abgesenkt und durch die Ausnehmungen17 des Bodens 18 bewegt. Daraufhin wird der Speicher 1 horizontal um eine Schachtbreite verfahren und die Stützleisten wieder nach oben durch die Ausnehmungen 17 der jetzt über ihnen stehenden gefüllten Schächte bewegt, so daß durch weiteres Anheben Packungsreihen aus den Schächten abgegeben werden können.
Mit 19 bezeichnete Antriebe zur Horizontalbewegung des Speichers 1 können z. B. Linearantriebe vom bekannten Typ HLE-150 der vorgenannten Firma Hauser sein und brauchen daher nicht im einzelnen dargestellt zu werden.
Die Transportbänder 7a, 7b verbinden den Auslaß der nicht dargestellten z. B. zweibahnigen Verpackungsmaschine mit dem Einlaß der ebenfalls nicht dargestellten z. B. zweibahnigen Weiterverarbeitungsmaschine. Selbstverständlich können jeweils auch mehrere Förderer, also Transportbänder, hintereinander angeordnet sein. Zum Bilden von Reihen 2a, 2b von Packungen 3 dienen Sperreinrichtungen 21a, 21b in Form von mittels Elektromagneten 22a, 22b in die Förderbahnen der Packungen 3 bewegbaren Sperrklinken 23a, 23b. Mit 24 ist ein Längsantrieb bezeichnet, durch den abgetrennte Reihen 2a, 2b um jeweils einen kurzen Weg in Richtung der Pfeile 9a, 9b bewegbar sind. Die sich im Bereich der Ansammelzone 4 befindlichen Führungsleisten 6a, 6b sind durch Linearantriebe 26a, 26b entsprechend den Doppelpfeilen 27a, 27b hin- und zurückbewegbar um einen Weg, der etwas größer als die Breite eines Schachtes 12 ist, so dass nach einer Hinbewegung die Packungsreihen 2a, 2b über den Schächten, nach der Rückbewegung wieder über den Transportbändern 7a, 7b angeordnet sind.
Mit 29a, 29b sind Klemmeinrichtungen bezeichnet, die durch Elektromagnete in Klemmstellung und Freigabestellung bewegbar sind. In Klemmstellung werden die geklemmten Packungen und damit entsprechend den Pfeilen 8a, 8b weiterhin zugeförderten Packungen 3 festgehalten, anderenfalls freigegeben. In Förderrichtung 8a, 8b vorgeordnete Sperreinrichtungen 31a, 31b haben Sperrklinken 32a, 32b, die von Elektromagneten 30a, 30b in und außer Sperrposition bewegbar sind. In Figur 3 sind die Sperrklinken 32a, 32b außer Sperrposition, die Sperrklinken 23a, 23b in Sperrposition dargestellt.

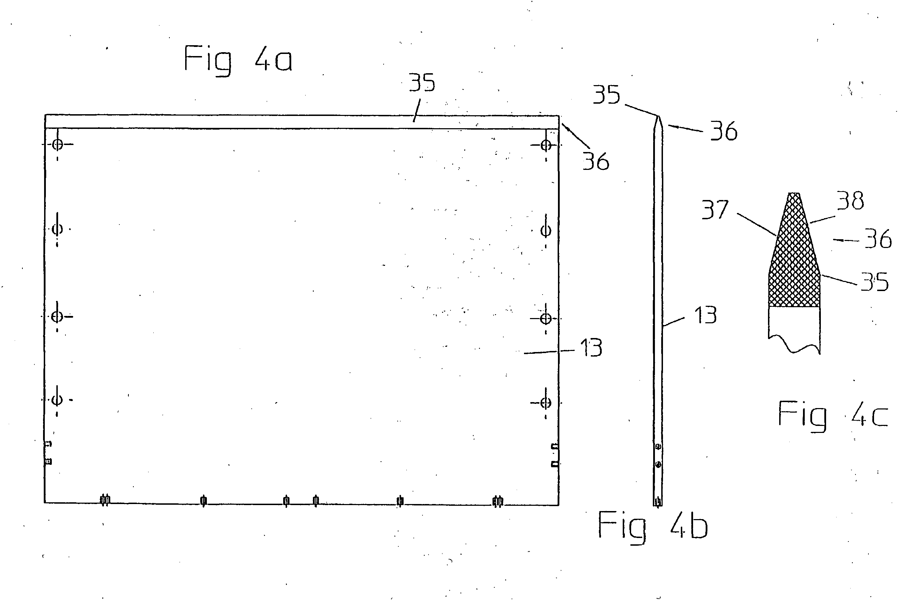

Figur 4 zeigt eine besonders vorteilhafte Ausbildung der Schachtwände 13. Sie bestehen aus einer Wabenverbundplatte mit CFK-Decklagen und sind daher leicht, aber auch besonders stabil. Die oberen Enden 36 tragen Leisten 35 mit aufeinander zulaufenden Flächen 37, 38, die das Einfüllen von Packungen in einen Schacht und das Entleeren erleichtert. Das Material kann vom Typ EP121-C15-53 der Firma Stesalit, 4234 Zullwil, CH, sein.

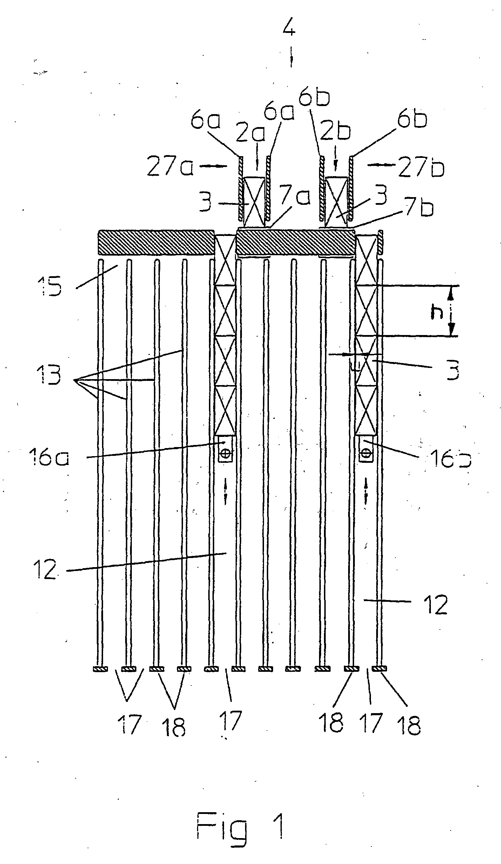

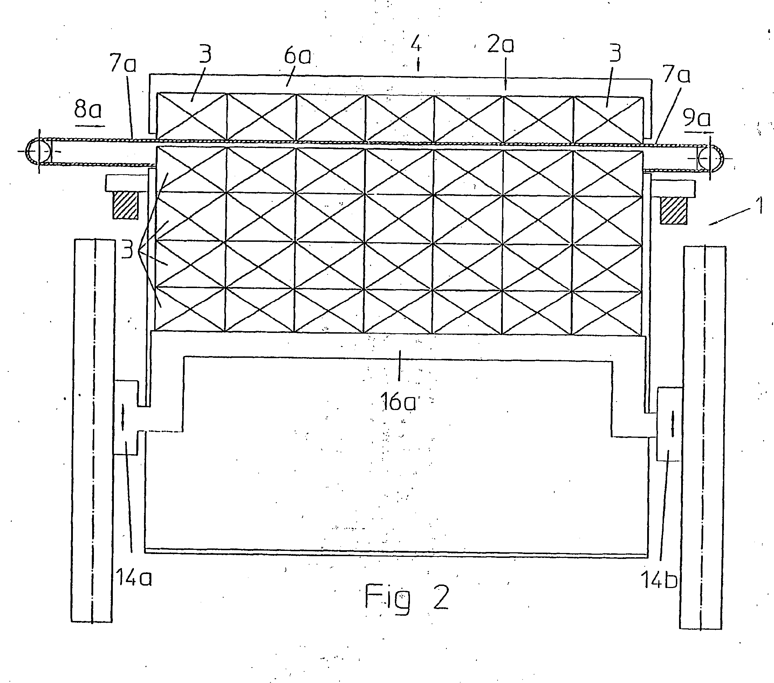

Wirkungsweise der Anordnung gemäß den Figuren 1 bis 4:
Von einer nicht dargestellten Packmaschine abgegebene Zigarettenpackungen 3 werden auf den Transportbändern 7a, 7b entsprechend den Pfeilen 8a, 8b in die Ansammelzone 4 herangefördert und bei ungestörter Weiterverarbeitungsmaschine (z. B. Folieneinschlagmaschine) entsprechend den Pfeilen 9a, 9b weitergefördert. Ist das Produktionsgleichgewicht zwischen Packmaschine und Weiterverarbeitungsmaschine gestört, d. h. steht letztere oder arbeitet sie mit verminderter Geschwindigkeit, so werden die weiter herangeförderten Packungen 3 in den Speicher übergeben. Hierzu werden die Sperrklinken 23a, 23b der Sperreinrichtung 21a, 21b in die dargestellte Position gebracht, in der sie die Packungen 3 aufhalten. Die Transportbänder 7a, 7b mit hoch gleitfähiger Oberfläche werden weiter angetrieben. Durch die Sperrung des Förderflusses der Packungen werden Packungsreihen 2a, 2b gebildet. Gleichzeitig werden die Klemmeinrichtungen 29a, 29b betätigt, die jeweils die letzten Packungen 3a, 3b vor dem Speicher festklemmen. Der Antrieb 24 für die Sperreinrichtungen 21a, 21b versetzt diese eine kurze Wegstrecke in Richtung der Pfeile 9a, 9b, so daß die Packungsreihen 2a, 2b von den geklemmten Packungen 3a, 3b freikommen. Daraufhin werden die Führungen 6a, 6b von den Antrieben 26a, 26b in Richtung der Pfeile 27a, 27b über die Schächte 12 geführt, in denen die Stützleisten 16a, 16b in der in Figur 1 dargestellten Position stehen. Die obersten Packungsreihen in den Schächten 12 sind durch einen Absenkschritt des Antriebs 14 um eine Packungshöhe abgesenkt. Die von den Führungen 6a, 6b mitgenommenen Packungen der Packungsreihen 2a, 2b werden zu den Einlässen 15 der Schächte 12 transportiert und gelangen in diese hinein und auf die obersten Packungsreihen, worauf die Antriebe wieder einen Senkschritt um eine Packungshöhe h veranlassen. Hiernach werden die Führungen 6a, 6b entsprechend dem Doppelpfeil 27a, 27b zurück über die Transportbänder 7a, 7b bewegt, die Sperreinrichtungen 21a, 21b von Antrieb 24 um eine kurze Distanz entgegen den Pfeilen 9a, 9b zurückgesetzt und die Klemmeinrichtungen 29a, 29b gelöst. Es können nun weitere Packungen 3 von den Transportbändern 7a, 7b in die Ansammelzone 4 gefördert werden, und es können dort weitere Packungsreihen 2a, 2b gebildet und in der beschriebenen Weise in die Schächte 12 des Speichers 1 überführt werden. Ist ein oder mehrere Schächte 12 gefüllt, so werden die Stützleisten 16a, 16b durch die Ausnehmungen 17 des Schachtbodens 18 nach unten bewegt und der Speicher 1 durch seinen Antrieb 19 um eine Schachtbreite verschoben. Anschließend werden die Stützleisten 16a, 16 b von unten durch die Ausnehmungen 17 in die leeren Schächte bewegt, wo sie hochbewegt werden, um in ihren obersten Stellungen die folgenden Packungsreihen übernehmen zu können.

Arbeitet die Weiterverarbeitungsmaschine wieder mit voller Leistung, dann werden die Sperrklinken 23a, 23b zurückgezogen und die Klemmeinrichtungen 29a, 29b inaktiviert, so daß der Fluß der Packungen 3 die Ansammelzone 4 ungehindert passiert.
Liefert die Packmaschine weniger Packungen als die Weiterverarbeitungsmaschine abnehmen kann, oder ist sie gestört, dann müssen Packungen Packungsreihen 2a, 2b aus dem Speicher 1 entnommen und auf die Transportbänder 7a, 7b überführt werden. Hierzu werden die Sperrklinken 32a, 32b der Sperreinrichtungen 31a, 31b in die Bahnen der zugeförderten Packungen hineinbewegt und dadurch der Fluß etwa noch weiter zugeförderter Einzelpackungen, die Störungen verursachen könnten, unterbrochen. Die Führungen 6a, 6b werden von den Antrieben 26a, 26b über die Schächte 12 bewegt und die Hubantriebe 14 der Stützleisten 16a, 16b aktiviert, so daß sie einen Aufwärtshub um eine Packungshöhe h ausführen. Hierdurch werden die obersten Packungsreihen zwischen die Führungen 6a, 6b gehoben und von diesen bei durch die Antriebe 26a, 26b verursachten Bewegungen auf die Transportbänder 7a, 7b verschoben, so daß die entnommenen Packungsreihen in Richtung der Pfeile 9a, 9b zu der Weiterverarbeitungsmaschine abgefördert werden können. Danach werden die Führungen über die Schächte bewegt, weitere Packungsreihen durch Anheben der Stützleisten dazwischengehoben und die Führungen wieder zu den Transportbändern verschoben usw.
Sind zwei Schächte entleert, so werden Stützleisten 16a, 16b nach unten und durch die Ausnehmungen 17 nach außen verfahren, worauf der Speicher 1 um eine Schachtbreite verschoben wird. Daraufhin werden die Stützleisten durch Ausnehmungen in zwei volle Schächte bewegt und schrittweise angehoben, wobei bei jedem Schritt um eine Packungshöhe h zwei Packungsreihen entnommen und auf die Transportbänder 7a, 7b bewegt werden.

Anstatt mit zwei Transportbändern und zwei Führungen kann die Erfindung auch mit nur einem Transportband und einer Führung realisiert werden.

## Patentansprüche

1. Verfahren zum Überführen von Gegenständen, insbesondere von Packungen, in Ausnehmungen eines Speichers, wobei aus auf einer Förderbahn hintereinander angeförderten Gegenständen mindestens eine definierte Reihe gebildet wird, diese Reihe nach ihrer Bildung mittels einer Fördervorrichtung quer zur Richtung der Anförderung und dann von oben in eine Ausnehmung des Speichers bewegt wird, **dadurch gekennzeichnet, dass** die Reihe in einer Ansammelzone zwischen Führungen gebildet wird und mittels der Führungen in einem einzigen Förderschritt aus der Ansammelzone über die Ausnehmung des Speichers bewegt wird.

2. Verfahren nach Anspruch 1, **dadurch gekennzeichnet, dass** die Ausnehmung des Speichers ein von oben befüllbarer Schacht ist und die Gegenstände in dem Schacht von absenkbaren und anhebbaren Stützen unterstützt werden.

3. Verfahren nach einem der vorhergehenden Ansprüche, **dadurch gekennzeichnet, dass** zum Entnehmen einer Reihe von Gegenständen aus einem Schacht die Reihe von der Stütze bis über den Schachteinlass angehoben, von den Führungen quer zur Förderrichtung auf die Förderbahn bewegt und auf dieser aus der Ansammelzone abgefördert wird.

4. Verfahren nach einem der vorhergehenden Ansprüche, **dadurch gekennzeichnet, dass** nach dem Füllen oder Entleeren mindestens eines Schachtes der Speicher um einen vorgegebenen Weg, vorzugsweise eine Schachtbreite, zwecks Freigabe eines leeren bzw. gefüllten schachtes bewegt wird.

5. Verfahren nach einem der vorhergehenden Ansprüche, **dadurch gekennzeichnet, dass** Gegenstände auf zwei Förderbahnen angefördert oder abgefördert und in Schächte hinein- bzw. aus diesen herausbewegt werden, und dass der Speicher um einen vorgegebenen Weg, vorzugsweise eine Schachtbreite, verfahren wird, wenn zwei Schächte gefüllt bzw. entleert sind.

6. Anordnung zum Überführen von Gegenständen, insbesondere von Packungen, in Ausnehmungen eines Speichers mit einer Ansammelzone (4) zum Bilden mindestens einer definierten Reihe (2a, 2b) von auf einer Förderbahn (7a, 7b) hintereinander angeförderten Gegenständen (3) sowie einer Fördervorrichtung (6a, 26a; 6b, 26b) zum Bewegen der Reihe quer zur Richtung der Anförderung (8a, 8b) in eine Ausnehmung des Speichers (1) in Form eines Schachtes (12), wobei die Fördervorrichtung **dadurch gekennzeichnet ist, dass** sie bewegbare Führungen (6a,6b) aufweist, welche die Reihe in einem einzigen Förderschritt aus der Ansammelzone über die Ausnehmung des Speichers fördern.

7. Anordnung nach Anspruch 6, **dadurch gekennzeichnet, dass** die Förderbahn als Förderband (7a; 7b) ausgebildet ist.

8. Anordnung nach Anspruch 6 oder 7, **dadurch gekennzeichnet, dass** zur Bildung einer definierten Reihe von Gegenständen eine stromaufwärts der Ansammelzone (4) angeordnete Klemmeinrichtung (29a, 29b) im Zufuhrbereich und eine Sperreinrichtung (22a, 22b; 23a, 23b) stromabwärts der Ansammelzone im Abförderbereich vorgesehen ist.

9. Anordnung nach Anspruch 8, **dadurch gekennzeichnet, dass** die Sperreinrichtung (22a, 23a; 22b, 23b) vor der Überführung einer Reihe in einen Schacht (12) eine kurze Strecke von ihrer Ruheposition in Förderrichtung (8a, 9a; 8b, 9b) entfernbar ist.

10. Anordnung nach einem der Ansprüche 6 bis 9, **dadurch gekennzeichnet, dass** eine bei der Entnahme einer Reihe aus einem Schacht aktivierbare Sperreinrichtung (31 a, 32a; 31 b, 32b) stromaufwärts der Klemmeinrichtung (29a, 29b) angeordnet ist.

11. Anordnung nach einem der Ansprüche 6 bis 10, **dadurch gekennzeichnet, dass** ein zu füllender oder zu entleerender Schacht (12) des Speichers (1) mit einer heb- und senkbaren Stütze (16a, 16b) versehen ist.

12. Anordnung nach einem der Ansprüche 6 bis 11, **dadurch gekennzeichnet, dass** zum Entnehmen einer Reihe von Gegenständen aus einem Schacht (12) die Reihe (2a, 2b) von der Stütze (16a, 16b) anhebbar, von den Führungen (6a, 6b) quer zur Förderrichtung (8a, 9a; 8b, 9b) auf ein Förderband (7a, 7b) bewegbar und von diesem aus der Ansammelzone (4) in Förderrichtung (9a, 9b) abförderbar ist.

13. Anordnung nach einem der Ansprüche 6 bis 12, **dadurch gekennzeichnet, dass** nach dem Füllen oder Entleeren eines Schachtes der Speicher (1) um einen vorgebbaren Weg, vorzugsweise ungefähr eine Schachtbreite, zwecks Freigabe eines leeren bzw. gefüllten Schachtes bewegbar ist.

14. Anordnung nach einem der Ansprüche 6 bis 13, **dadurch gekennzeichnet, dass** Gegenstände auf zwei Förderbahnen (7a, 7b) anförderbar oder abförderbar und in die Schächte hinein- bzw. aus diesen herausbewegbar sind.

15. Anordnung nach einem der Ansprüche 6 bis 14, **dadurch gekennzeichnet, dass** der Speicher als Zigarettenpackungsspeicher ausgebildet ist.

16. Anordnung nach einem der Ansprüche 6 bis 15, **dadurch gekennzeichnet, dass** der Speicher (1) aus einer Anzahl von durch vertikale Wände (13) gebildeten Schächten (12) besteht.

17. Anordnung nach Anspruch 16, **dadurch gekennzeichnet, dass** die Schachtwände (13) aus Wabenverbundplatten mit CFK-Decklagen bestehen.

18. Anordnung nach Anspruch 16 oder 17, **dadurch gekennzeichnet, dass** an der Oberseite (36) der Schachtwände (13) Leisten (35) mit aufeinander zulaufenden Flächen (37, 38) angebracht sind.

## Claims

1. A method of transferring articles, in particular packages, into recesses in a store, wherein at least one defined row is formed from articles supplied in succession on a conveying path, after the said row has been formed it is moved by means of a conveying device transversely to the direction of the supplying and then from above into a recess in the store, **characterized in that** the row is formed in a collection zone between guides and is moved by means of the guides in a single conveying step out of the collection zone by way of the recess in the store.

2. A method according to Claim 1, **characterized in that** the recess in the store is a compartment which can be filled from above, and the articles are supported in the compartment by supports which can be lowered and raised.

3. A method according to one of the preceding Claims, **characterized in that** in order to remove a row of articles from a compartment the row is raised by the support to above the entry to the compartment, is moved by the guides transversely to the conveying direction onto the conveying path and is removed on the latter out of the collection zone.

4. A method according to one of the preceding Claims, **characterized in that** after the filling or emptying of at least one compartment the store is moved by a pre-determined amount, preferably the width of a compartment, in order to release an empty or filled compartment.

5. A method according to one of the preceding Claims, **characterized in that** articles are supplied or removed on two conveying paths and are moved into compartments or out of them, and the store is moved by a pre-determined path, preferably the width of a compartment, when two compartments are filled or emptied.

6. A device for transferring articles, in particular packages, into recesses in a store with a collection zone (4) for forming at least one defined row (2a, 2b) from articles (3) supplied in succession on a conveying path (7a, 7b), and a conveying device (6a, 26a; 6b, 26b) for moving the row transversely to the direction of the supplying (8a, 8b) into a recess in the store (1) in the form of a compartment (12), wherein the conveying device is **characterized in that** it has movable guides (6a, 6b) which convey the row in a single conveying step out of the collection zone by way of the recess in the store.

7. A device according to Claim 6, **characterized in that** the conveying path is constructed in the form of a conveyor belt (7a, 7b).

8. A device according to Claim 6 or 7, **characterized in that** in order to form a defined row of articles a clamping device (29a, 29b) arranged upstream of the collection zone (4) is provided in the arrival region and a locking device (22a, 22b; 23a, 23b) is provided downstream of the collection zone in the removal region.

9. A device according to Claim 8, **characterized in that** before the transfer of a row into a compartment (12) the locking device (22a, 23a; 22b, 23b) can be removed by a short amount from its rest position in the conveying direction (8a, 9a; 8b, 9b).

10. A device according to one of Claims 6 to 9, **characterized in that** a locking device (31a, 32a; 31b, 32b), which can be activated during the removal of a row from a compartment, is arranged upstream of the clamping device (29a, 29b).

11. A device according to one of Claims 6 to 10, **characterized in that** a compartment (12) of the store (1) to be filled or emptied is provided with a support (16a, 16b) which can be raised and lowered.

12. A device according to one of Claims 6 to 11, **characterized in that** in order to remove a row of articles from a compartment (12) the row (2a, 2b) can be raised by the support (16a, 16b), can be moved by the guides (6a, 6b) transversely to the conveying direction (8a, 9a; 8b, 9b) onto a conveyor belt (7a, 7b) and can be removed by the latter out of the collection zone (4) in the conveying direction (9a, 9b).

13. A device according to one of Claims 6 to 12, **characterized in that** after the filling or emptying of a compartment the store (1) can be moved by a pre-determined amount, preferably approximately the width of a compartment, in order to release an empty or filled compartment.

14. A device according to one of Claims 6 to 13, **characterized in that** articles can be supplied or removed on two conveying paths (7a, 7b) and can be moved into the compartments or out of them.

15. A device according to one of Claims 6 to 14, **characterized in that** the store is designed in the form of a store for cigarette packets.

16. A device according to one of Claims 6 to 15, **characterized in that** the store (1) comprises a number of compartments (12) formed by vertical walls (13).

17. A device according to Claim 16, **characterized in that** the compartment walls (13) comprise honeycomb-type composite plates with covering layers of carbon-fibre-reinforced plastics.

18. A device according to Claim 16 or 17, **characterized in that** strips (35) with converging faces (37, 38) are attached to the top (36) of the compartment walls. (13).

## Revendications

1. Procédé pour transférer des objets, notamment des emballages, dans des évidements d'un accumulateur, selon lequel on forme tout d'abord au moins une rangée définie à partir d'objets amenés les uns derrière les autres sur une voie de transport, on déplace la rangée après formation, au moyen d'un dispositif de transport, transversalement par rapport à la direction d'amenée, et ensuite à partir du haut dans un évidement de l'accumulateur, **caractérisé en ce que** la rangée est formée, dans une zone d'accumulation, entre des guides, et déplacée au moyen des guides dans une unique étape de transport hors de la zone d'accumulation sur un évidement d'un accumulateur.

2. Procédé selon la revendication 1, **caractérisé en ce qu'**un évidement de l'accumulateur a la forme d'un puits pouvant être rempli à partir du haut, et que les objets sont supportés dans le puits par des supports pouvant être abaissés et soulevés.

3. Procédé selon l'une des revendications précédentes, **caractérisé en ce que** pour retirer une rangée d'objets à partir d'un puits, la rangée est soulevée par le support jusqu'au-dessus de l'entrée du puits, est déplacée par les guides transversalement par rapport à la direction de transport sur la voie de transport et est évacuée sur cette dernière hors de la zone d'accumulation.

4. Procédé selon l'une des revendications précédentes, **caractérisé en ce qu'**après le remplissage ou le vidage d'au moins un puits, l'accumulateur est déplacé sur un trajet prédéterminé, de préférence une largeur d'un puits, de manière à libérer un puits vide ou rempli.

5. Procédé selon l'une des revendications précédentes, **caractérisé en ce que** les objets sont amenés ou évacués sur deux voies de transport et sont introduits dans des puits ou en sont ressortis et que l'accumulateur est déplacé d'une distance prédéterminée, de préférence une largeur d'un puits, lorsque deux puits sont remplis ou vidés.

6. Dispositif pour transférer des objets, notamment des emballages, dans des évidements d'un accumulateur associé comportant une zone d'accumulation (4) pour la formation d'au moins une rangée définie (2a, 2b) d'objets (3) amenés successivement sur une voie de transport (7a, 7b), ainsi qu'un dispositif de transport (6a, 26a, 6b, 26b) pour déplacer la rangée transversalement par rapport à la direction d'amenée (8a, 8b) dans un évidement (12) de l'accumulateur (1) ayant la forme d'un puits (12), le dispositif de transport étant **caractérisé en ce qu'**il comporte des guides (6a, 6b) déplaçables qui transporte la rangé dans une unique étape de transport hors de la zone d'accumulation sur un évidement de l'accumulateur.

7. Dispositif selon la revendication 6, **caractérisé en ce que** la voie de transport est agencée sous la forme d'une bande transporteuse (7a, 7b).

8. Dispositif selon la revendication 6 ou la revendication 7, **caractérisé en ce que**, pour la formation d'une rangée définie d'objets, un dispositif de serrage (29a, 29b) disposé en amont de la zone d'accumulation (4) est prévu dans la zone d'amenée, et un dispositif de blocage (22a, 22b; 23a, 23b) est prévu en aval de la zone d'accumulation dans la zone d'évacuation.

9. Dispositif selon la revendication 8, **caractérisé en ce que** les dispositifs de blocage (22a, 23a; 22b, 23b) peuvent être retirés, avant le transfert d'une rangée dans un puits (12), sur une courte section à partir de leur position de repos dans la direction de transport (8a, 9a; 8b, 9b).

10. Dispositif selon l'une des revendications 6 à 9, **caractérisé en ce qu'**un dispositif de blocage (31a, 32a; 31b, 32b) pouvant être activé lors du prélèvement d'une rangée à partir d'un puits est disposé en amont du dispositif de serrage (29a, 29b).

11. Dispositif selon l'une des revendications 6 à 10, **caractérisé en ce qu'**un puits devant être rempli ou vidé (12) de l'accumulateur (1) est pourvu d'un support (16a, 16b) pouvant être soulevé et abaissé.

12. Dispositif selon l'une des revendications 6 à 11, **caractérisé en ce que** pour le prélèvement d'une rangée d'objets à partir d'un puits (12), la rangée (2a, 2b) peut être soulevée par le support (16a, 16b), peut être déplacée par les guides (6a, 6b) transversalement par rapport à la direction de transport (8a, 9a; 8b, 9b) sur une bande transporteuse (7a, 7b) et peut être évacué par cette dernière hors de la zone d'accumulation (4) dans la direction de transport (9a, 9b).

13. Dispositif selon l'une des revendications 6 à 12, **caractérisé en ce qu'**après le remplissage ou le vidage d'un puits, l'accumulateur (1) est déplaçable sur une distance pouvant être prédéterminée, de préférence approximativement une largeur de puits, pour la libération d'un puits vide ou rempli.

14. Dispositif selon l'une des revendications 6 à 13, **caractérisé en ce que** des objets peuvent être amenés ou évacués sur deux voies de transport (7a, 7b) et peuvent être introduits dans les puits ou en être ressortis.

15. Dispositif selon l'une des revendications 6 à 14, **caractérisé en ce que** l'accumulateur est agencé sous la forme d'un accumulateur d'emballages de cigarettes.

16. Dispositif selon l'une des revendications 6 à 15, **caractérisé en ce que** l'accumulateur (1) est constitué par deux puits (12) formés par des parois verticales(13).

17. Dispositif selon la revendication 16, **caractérisé en ce que** les parois (13) des puits sont constituées par des plaques composites en nids d'abeille comportant des couches de revêtement CFK.

18. Dispositif selon la revendication 16 ou 17, **caractérisé en ce que** des barrettes (35) portant des surfaces convergentes (37, 38) sont disposées sur le côté supérieur (36) des parois (13) des puits.
